# EUROPÄISCHE PATENTSCHRIFT

(11) **EP 1 880 891 B1**
(45) Veröffentlichungstag und Bekanntmachung des Hinweises auf die Patenterteilung: **03.06.2009**
(21) Anmeldenummer: 07110333.7
(22) Anmeldetag: 15.06.2007
(51) Int. Cl.: B60K 37/02, B60Q 3/04, F21S 8/00

(54) **Anzeigevorrichtung**
Display device
Dispositif d'affichage

(30) Priorität: 20.07.2006 DE 102006033640; 29.09.2006 DE 102006046404
(43) Veröffentlichungstag der Anmeldung: 23.01.2008
(73) Patentinhaber: ROBERT BOSCH GMBH, 70442 Stuttgart (DE)
(72) Erfinder: Schach, Harald, 71287, Weissach (DE); Vogt, Thomas, 71640, Ludwigsburg (DE)

(56) Entgegenhaltungen:
- EP-A- 0 785 416
- DE-A1- 10 026 860
- FR-A- 2 679 998

## Beschreibung

### Stand der Technik

Die Erfindung bezieht sich auf eine Anzeigevorrichtung für ein Kraftfahrzeug, mit zwei in verschiedenen Ebenen schwenkbeweglich angeordneten Zeigern, wobei dem von einem Ziffernblatt zumindest abschnittsweise abgedeckten hinteren Zeiger eine Lichtquelle zugeordnet ist.

Eine derartige Anzeigevorrichtung wird insbesondere in einem Kombiinstrument eines Kraftfahrzeuges zur Darstellung der Fahrgeschwindigkeit als Tachometer-Anzeige verwendet. Hierbei ist ein vorderer Zeiger drehbar vor einem Ziffernblatt gelagert, das einen mit einer Skalierung versehenen Anzeigebereich aufweist, so dass aufgrund der Auslenkung des vorderen Zeigers der jeweilige Wert des Anzeigebereichs markiert wird.

Zusätzlich zu der jeweiligen Fahrgeschwindigkeit ist oftmals eine Anzeige eines durch eine Tempomatfunktion oder Limiterfunktion bestimmten Werts gewünscht. Bei einer Tempomatfunktion wird von dem Fahrer ein Sollwert der Geschwindigkeit eingestellt, der von einer Regeleinrichtung, beispielsweise über die Motorsteuerung, jeweils gehalten wird, bis ein anderer Wert eingestellt wird oder das Gaspedal oder das Bremspedal betätigt wird. Bei einer Limiterfunktion wird eine Maximalgeschwindigkeit des Fahrzeugs vorgegeben, wobei eine Regeleinrichtung, beispielsweise das Motorsteuergerät, bei höheren Geschwindigkeiten abregelt. Eine derartige Limiterfunktion kann in einem Kraftfahrzeug auch fest vorprogrammiert sein.

Zum Teil wird hierbei eine Anzeige des eingestellten Geschwindigkeitswertes der Tempomatfunktion oder Limiterfunktion in der Tachometeranzeige zusammen mit der jeweiligen Fahrgeschwindigkeit gewünscht. Eine derartige Anzeige des jeweils eingestellten Geschwindigkeitswertes kann beispielsweise über einen zweiten, koaxialen Zeiger, der hierzu in einer zweiten Ebene schwenkbeweglich ist, erfolgen.

Eine gattungsgemäße Anzeigevorrichtung für ein Kraftfahrzeug zeigt beispielsweise die DE 100 26 860 A1, die mit einem in einer axialen Richtung hinter dem vorderen Zeiger angeordneten vorderen Ziffernblatt mit einem vorderen Anzeigebereich, einem axial hinter dem vorderen Ziffernblatt angeordneten, drehbaren hinteren Zeiger, und einem axial hinter dem hinteren Zeiger angeordneten hinteren Ziffernblatt mit einem hinteren Anzeigebereich ausgestattet ist. Dabei überlappen sich die beiden Anzeigebereiche zumindest abschnittsweise radial. Dadurch wird eine Darstellung sowohl der Fahrgeschwindigkeit als auch des eingestellten Geschwindigkeitswertes über zwei Zeiger und zwei Ziffernblätter gewährleistet.

Weiterhin offenbart die EP 07 85 416 A1 eine für ein Kraftfahrzeug bestimmte Anzeigevorrichtung mit einem über ein Ziffernblatt schwenkbeweglichen Zeiger und einen Stellmotor. Eine auf eine Platine angeordnete Leuchtdiode strahlt in einen einen hinteren Zeiger bildenden u-förmigen Lichtleiter ein, welcher rückseitig an der Welle eines Stellmotors angeordnet ist und bis zu einer bogenförmigen Deckscheibe im Ziffernblatt geführt ist.

In der Praxis hat sich jedoch die Einkopplung des Lichts in den hinteren Zeiger aufgrund des damit verbundenen Lichtverlustes als nachteilig erwiesen. Insbesondere reicht die Ablesbarkeit, insbesondere bei Reflexen des Sonnenlichts oder einer Straßenbeleuchtung oftmals nicht aus.

Durch die EP 07 85 416 A1 ist auch bereits bekannt, zur Anzeige der Sollwertmarkierung eine unbewegliche Laserkanone einzusetzen. Mittels des Stellmotors wird ein Spiegel geschwenkt, so dass ein Laserstrahl über einen bogenförmigen Spiegel in eine vorgesehene Position in einem bogenförmigen Spalt im Ziffernblatt ausgelenkt und dort für den Betrachter sichtbar wird.

### Offenbarung der Erfindung

### Vorteile der Erfindung

Die erfindungsgemäße Anzeigevorrichtung, bei der die Lichtquelle an dem hinteren Zeiger, an dessen radial äußeren Endabschnitt angeordnet ist und die ein das Ziffernblatt konzentrisch einschließendes Lichtleitelement mit einer Einkoppelfläche für das von der Lichtquelle emittierte Licht aufweist, hat demgegenüber den Vorteil, dass die Ablesbarkeit einer der hinteren Zeigerstellung entsprechenden Anzeige wesentlich verbessert ist, weil die dabei auftretenden Lichtverluste auf ein Minimum reduziert werden. Insbesondere wird also mit relativ geringem Aufwand eine gute Wiedergabe und Genauigkeit beim Ablesen der beiden Zeigerdarstellungen gewährleistet. Zugleich ist die Zeigerform unabhängig von dem gewünschten Lichtmarker, der beispielsweise auch ein Lichtsymbol bilden kann, weil dessen Kontur lediglich durch die Lichtquelle und gegebenenfalls in dem Strahlengang des Lichtes angeordnete optische Elemente, nicht aber durch den Zeigerquerschnitt bestimmt ist. Der Zeiger kann demnach beispielsweise auch als eine ebene oder konkave Kreisscheibe ausgeführt oder mit einem der Lichtquelle entsprechenden Ausgleichsgewicht ausgestattet sein. Weiterhin bietet die erfindungsgemäße Anzeigevorrichtung die Möglichkeit der optischen Variation, so dass beispielsweise Balken, Punkte oder Pfeilsymbole darstellbar sind. Auch Farbvariationen oder blinkende Darstellungen in Abhängigkeit bestimmter Fahrsituationen sind dabei realisierbar. Ferner kann der Lichtmarker mittels des optischen Elementes derart variabel formbar sein, dass dieser beispielsweise in Abhängigkeit der Winkelstellung des hinteren Zeigers eine wechselnde Kontur abbildet.

Durch die in den abhängigen Ansprüchen aufgeführten Maßnahmen sind vorteilhafte Weiterbildungen und Verbesserungen der im unabhängigen Anspruch angegebenen Erfindung möglich. Beispielsweise kann das Lichtleitelement betrachterseitig in einer mit dem Ziffernblatt gemeinsamen Ebene angeordnet sein. Besonders vorteilhaft ist demgegenüber eine Abwandlung der vorliegenden Erfindung, bei der das Lichtleitelement eine gegenüber der Ebene des Ziffernblatts geneigte Lichtaustrittsfläche hat. Hierdurch wird eine unerwünschte Blendwirkung des Benutzers zuverlässig ausgeschlossen und zugleich ein ästhetisch ansprechendes Erscheinungsbild realisiert.

Dabei erweist es sich als besonders praxisnah, wenn die Lichtaustrittsfläche gegenüber dem Ziffernblatt zwischen 30° und 60° insbesondere um 45° geneigt angeordnet ist. Hierdurch wird eine radiale Lichtabstrahlung des Lichtleitelementes zuverlässig vermieden, um so die Beleuchtung mittels der einer Ziffernblattmitte zugewandten Lichtaustrittsfläche auf das Ziffernblatt derselben Anzeigevorrichtung zu beschränken und eine mögliche Beeinträchtigung benachbarter Anzeigevorrichtungen zu vermeiden.

Hierzu ist gemäß einer besonders praxisgerechten Abwandlung das Lichtleitelement als ein Coronaring ausgeführt. Der Coronaring ist dabei als ein transparenter Ring, insbesondere als ein Spritzgussteil, beispielsweise aus dem Werkstoff PMMA oder PC derart ausgestaltet, dass dieser mit wenigen Lichtquellen homogen ausgeleuchtet werden kann. Mit Hilfe der angrenzenden Tachometerskala lässt sich der auf dem Coronaring erzeugte Lichtmarker mit hoher Genauigkeit ablesen.

Eine andere, ebenfalls besonders sinnvolle Ausgestaltung der vorliegenden Erfindung wird dann erreicht, wenn das Lichtleitelement mit der ersten Einkoppelfläche für das Licht der Lichtquelle sowie mit einer zweiten Einkoppelfläche für das von einer Hintergrundlichtquelle emittierte Licht einteilig verbunden ist. Hierdurch wird eine konstante Hintergrundbeleuchtung des Lichtleitelementes mit einer vergleichsweise geringen Leuchtdichte, die beispielsweise auch dem verbesserten optischen Erscheinungsbild der Anzeigevorrichtung dient, und zugleich eine Überlagerung der Hintergrundbeleuchtung durch den Lichtmarker der Lichtquelle des hinteren Zeigers ermöglicht. Eine unerwünschte Abschattung der Hintergrundbeleuchtung in der Nähe des Zeigers wird durch die beiden separaten Einkoppelflächen vermieden.

In der Praxis schließen die Flächennormalen der beiden Einkoppelflächen einen spitzen Winkel ein, wobei die Lichteinkoppelfläche der Lichtquelle des hinteren Zeigers parallel zu der Ebene des Ziffernblattes und die andere Lichteinkoppelfläche entsprechend geneigt angeordnet sein kann. Weiterhin könnten auch beide Lichteinkoppelflächen gegenüber der Ebene des Ziffernblattes geneigt angeordnet sein. Besonders vorteilhaft ist demgegenüber jedoch eine Ausführungsform der vorliegenden Erfindung, bei welcher die erste Einkoppelfläche gegenüber der Ebene des Ziffernblatts zwischen 30° und 60° insbesondere um 45° geneigt angeordnet ist. Hierdurch wird ein kompakter Aufbau der Anzeigevorrichtung erreicht, wobei eine Hintergrundlichtquelle zur Hintergrundbeleuchtung auf einer zu dem Ziffernblatt parallelen Platine in das ringförmige Lichtleitelement unmittelbar einstrahlt und der von dem Lichtleitelement eingeschlossene Zeiger die Lichtquelle derart trägt, dass das abgestrahlte Licht seitlich ohne weitere Umlenkelemente, beispielsweise Reflektoren, in das Lichtleitelement eingekoppelt und in Richtung der Austrittsfläche umgelenkt wird.

Hierzu erweist es sich als besonders sinnvoll, wenn die Lichtquelle derart an dem Zeiger angeordnet ist, dass das abgestrahlte Licht im Wesentlichen senkrecht zu der Einkoppelfläche in das Lichtleitelement einkoppelbar ist, um so mögliche Verluste weitgehend ausschließen zu können.

Zu diesem Zweck könne die Lichtquelle gegenüber der Haupterstreckung des hinteren Zeigers geneigt an diesem fixiert sein. Besonders praxisnah ist es hingegen, wenn der radiale Endabschnitt des hinteren Zeigers gegenüber der Ebene des Ziffernblattes abgewinkelt oder gekröpft angeordnet ist, so dass die Lichtquelle flächig an diesem Endabschnitt angebracht werden kann.

Eine weitere ebenfalls besonders Erfolg versprechende Ausgestaltung der vorliegenden Erfindung wird auch dann erreicht, wenn das von der Hintergrundlichtquelle in das Lichtleitelement eingekoppelte Licht mit einer Leuchtdichte von min. 10 cd/m² insbesondere zwischen 10 cd/m² und 100 cd/m² an der Lichtaustrittsfläche für den Betrachter sichtbar ist, um so einerseits eine deutlich wahrnehmbare Hintergrundbeleuchtung, andererseits eine unerwünschte Ablenkung des Betrachters, beispielsweise vom Fahrgeschehen zu verhindern.

Zur Realisierung einer überlagerten Projektion des mittels der Lichtquelle darstellbaren Lichtmarkers und der mittels der Hintergrundlichtquelle einstellbaren Hintergrundbeleuchtung weist die Lichtquelle des Zeigers eine wesentlich größere Lichtstärke auf als die Hintergrundlichtquelle.

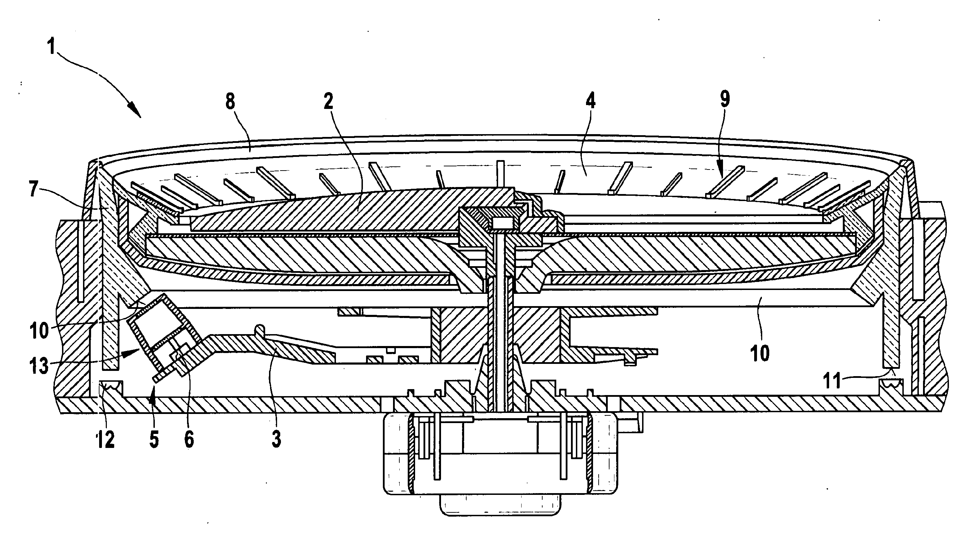

### Kurze Beschreibung der Zeichnung

Ein Ausführungsbeispiel der Erfindung ist in der Zeichnung dargestellt und in der nachfolgenden Beschreibung näher erläutert. Darin zeigt die Figur eine Anzeigevorrichtung in einer geschnittenen Seitenansicht.

### Ausführungsformen der Erfindung

In der Figur ist eine Anzeigevorrichtung 1 für ein nicht dargestelltes Kraftfahrzeug in einer geschnittenen Seitenansicht gezeigt. Die Anzeigevorrichtung 1 hat zwei in parallelen Ebenen schwenkbeweglich angeordnete Zeiger 2, 3, denen ein gemeinsames Ziffernblatt 4 zugeordnet ist. Der hintere Zeiger 3 ist von dem kreisförmigen Ziffernblatt 4 abgedeckt und daher für den Betrachter unsichtbar. Zur Darstellung eines als Lichtmarker für den Betrachter erkennbaren, nicht dargestellten Lichtbalkens trägt der hintere Zeiger 3 an seinem äußeren Endabschnitt 5 eine Lichtquelle 6, welche in ein das Ziffernblatt 4 konzentrisch einschließendes Lichtleitelement 7 einstrahlt und an einer gegenüber der Ebene des Ziffernblatts 4 um 45° geneigten Lichtaustrittsfläche 8 sichtbar wird. In Verbindung mit einer Skala 9 ermöglicht der Lichtmarker somit eine Eindeutige Zuordnung eines Wertes. Hierzu ist das Lichtleitelement 7 mit der ersten, gegenüber der Ebene des Ziffernblatts 4 um 45° geneigt angeordneten Einkoppelfläche 10 für das Licht der Lichtquelle 6 sowie mit einer zweiten Einkoppelfläche 11 für das von einer Hintergrundlichtquelle 12 , beispielsweise mehrerer LED, als Hintergrundbeleuchtung des Lichtmarkers ausgestattet, die von der Zeigerstellung des Zeigers 3 unabhängig ist. Die Lichtquelle 6 ist zu diesem Zweck an dem hierzu abgewinkelten radialen Endabschnitt 5 angeordnet und strahlt in ein optisches Element 13 ein, welches mit einer den Lichtmarker formenden Spaltblende und einer Fokussierlinse ausgestattet ist.

## Patentansprüche

1. Anzeigevorrichtung (1) für ein Kraftfahrzeug, mit zwei in verschiedenen Ebenen schwenkbeweglich angeordneten Zeigern (2, 3), wobei dem von einem Ziffernblatt (4) zumindest abschnittsweise abgedeckten hinteren Zeiger (3) eine Lichtquelle (6) zugeordnet ist, **dadurch gekennzeichnet, dass** die Lichtquelle (6) an dem radialen äußeren Endabschnitt des hinteren Zeigers (3) angeordnet ist und dass die Anzeigevorrichtung (1) ein das Ziffernblatt (4) konzentrisch einschließendes Lichtleitelement (7) mit einer Einkoppelfläche (10) für das von der Lichtquelle (6) emittierte Licht aufweist.

2. Anzeigevorrichtung (1) nach Anspruch 1, **dadurch gekennzeichnet, dass** das Lichtleitelement (7) eine gegenüber der Ebene des Ziffernblatts (4) geneigte Lichtaustrittsfläche (8) hat.

3. Anzeigevorrichtung (1) nach Anspruch 1 oder 2, **dadurch gekennzeichnet, dass** die Lichtaustrittsfläche (8) gegenüber dem Ziffernblatt (4) zwischen 30° und 60° geneigt angeordnet ist.

4. Anzeigevorrichtung (1) nach mindestens einem der vorhergehenden Ansprüche, **dadurch gekennzeichnet, dass** das Lichtleitelement (7) als ein Coronaring augeführt ist.

5. Anzeigevorrichtung (1) nach mindestens einem der vorhergehenden Ansprüche, **dadurch gekennzeichnet, dass** das Lichtleitelement (7) mit der ersten Einkoppelfläche (10) für das Licht der Lichtquelle (6) sowie mit einer zweiten Einkoppelfläche (11) für das von einer Hintergrundlichtquelle (12) emittierte Licht ausgestattet ist.

6. Anzeigevorrichtung (1) nach Anspruch 5 **dadurch gekennzeichnet, dass** die erste Einkoppelfläche (10) gegenüber der Ebene des Ziffernblatts (4) zwischen 30° und 60° geneigt angeordnet ist.

7. Anzeigevorrichtung (1) nach Anspruch 5 oder 6, **dadurch gekennzeichnet, dass** die Lichtquelle (6) derart an dem Zeiger (3) angeordnet ist, dass das abgestrahlte Licht senkrecht zu der ersten Einkoppelfläche (10) des Lichtleitelementes (7) einkoppelbar ist.

8. Anzeigevorrichtung (1) nach mindestens einem der vorhergehenden Ansprüche, **dadurch gekennzeichnet, dass** der radiale Endabschnitt (5) des hinteren Zeigers (3) gegenüber der Ebene des Ziffernblattes (4) abgewinkelt und/oder gekröpft angeordnet ist.

9. Anzeigevorrichtung (1) nach mindestens einem der vorhergehenden Ansprüche, **dadurch gekennzeichnet, dass** das von der Hintergrundlichtquelle in das Lichtleitelement eingekoppelte Licht mit einer Leuchtdichte von min. 10 cd/m² an der Lichtaustrittsfläche für den Betrachter sichtbar ist.

10. Anzeigevorrichtung (1) nach mindestens einem der vorhergehenden Ansprüche, **dadurch gekennzeichnet, dass** zur Realisierung einer überlagerten Projektion eines mittels der Lichtquelle (6) darstellbaren Lichtmarkers und einer mittels der Hintergrundlichtquelle (12) einstellbaren Hintergrundbeleuchtung die Lichtquelle (6) des Zeigers (3) eine größere Lichtstärke aufweist als die Hintergrundlichtquelle (12).

## Claims

1. Display device (1) for a motor vehicle, having two pointers (2, 3) arranged pivotably in different planes, the rear pointer (3) covered, at least in some sections, by a dial (4) being assigned a light source (6), **characterized in that** the light source (6) is arranged on the radially outer end section of the rear pointer (3), and **in that** the display device (1) has a light-guiding element (7) concentrically enclosing the dial (4) and with an input-coupling surface (10) for the light emitted by the light source (6).

2. Display device (1) according to Claim 1, **characterized in that** the light-guiding element (7) has a light exit surface (8) inclined to the plane of the dial (4).

3. Display device (1) according to Claim 1 or 2, **characterized in that** the light exit surface (8) is arranged inclined by between 30° and 60° to the dial (4).

4. Display device (1) according to at least one of the preceding claims, **characterized in that** the light-guiding element (7) is designed as a corona ring.

5. Display device (1) according to at least one of the preceding claims, **characterized in that** the light-guiding element (7) is equipped with the first input coupling surface (10) for the light of the light source (6), and with a second input coupling surface (11) for the light emitted by a background light source (12).

6. Display device (1) according to Claim 5, **characterized in that** the first input coupling surface (10) is arranged inclined by between 30° and 60° to the plane of the dial (4).

7. Display device (1) according to Claim 5 or 6, **characterized in that** the light source (6) is arranged on the pointer (3) in such a way that the radiated light can be coupled in perpendicular to the first input coupling surface (10) of the light-guiding element (7).

8. Display device (1) according to at least one of the preceding claims, **characterized in that** the radial end section (5) of the rear pointer (3) is arranged in a fashion angled away, and/or offset, from the plane of the dial (4).

9. Display device (1) according to at least one of the preceding claims, **characterized in that** the light coupled into the light-guiding element from the background light source is visible to the viewer with a luminance of at least 10 cd/m² at the light exit surface.

10. Display device (1) according to at least one of the preceding claims, **characterized in that** the light source (6) of the pointer (3) has a higher luminous intensity than the background light source (12) in order to implement a superimposed projection of a light marker that can be displayed by means of the light source (6) and a background illumination which can be set by means of the background light source (12).

## Revendications

1. Dispositif indicateur (1) pour un véhicule automobile, comprenant deux aiguilles (2, 3) disposées de manière à pouvoir pivoter dans des plans différents, une source de lumière (6) étant associée à l'aiguille arrière (3) qui est au moins partiellement recouverte par un cadran gradué (4), **caractérisé en ce que** la source de lumière (6) est disposée au niveau de la section d'extrémité extérieure radiale de l'aiguille arrière (3) et **en ce que** le dispositif indicateur (1) présente un élément conducteur de lumière (7) qui englobe le cadran gradué (4) de manière concentrique et qui comprend une surface d'injection (10) pour la lumière émise par la source de lumière (6).

2. Dispositif indicateur (1) selon la revendication 1, **caractérisé en ce que** l'élément conducteur de lumière (7) possède une surface de sortie de la lumière (8) inclinée par rapport au plan du cadran gradué (4).

3. Dispositif indicateur (1) selon la revendication 1 ou 2, **caractérisé en ce que** la surface de sortie de la lumière (8) est disposée inclinée entre 30° et 60° par rapport au cadran gradué (4).

4. Dispositif indicateur (1) selon au moins l'une des revendications précédentes, **caractérisé en ce que** l'élément conducteur de lumière (7) est réalisé sous la forme d'un anneau corona.

5. Dispositif indicateur (1) selon au moins l'une des revendications précédentes, **caractérisé en ce que** l'élément conducteur de lumière (7) est équipé de la première surface d'injection (10) pour la lumière de la source de lumière (6) ainsi que d'une deuxième surface d'injection (11) pour la lumière émise par une source d'éclairage d'arrière-plan (12).

6. Dispositif indicateur (1) selon la revendication 5, **caractérisé en ce que** la première surface d'injection (10) est disposée inclinée entre 30° et 60° par rapport au plan du cadran gradué (4).

7. Dispositif indicateur (1) selon la revendication 5 ou 6, **caractérisé en ce que** la source de lumière (6) est disposée sur l'aiguille (3) de telle sorte que la lumière émise peut être injectée perpendiculairement à la première surface d'injection (10) de l'élément conducteur de lumière (7).

8. Dispositif indicateur (1) selon au moins l'une des revendications précédentes, **caractérisé en ce que** la section d'extrémité radiale (5) de l'aiguille arrière (3) est disposée coudée et/ou courbée par rapport au plan du cadran gradué (4).

9. Dispositif indicateur (1) selon au moins l'une des revendications précédentes, **caractérisé en ce que** la lumière injectée dans l'élément conducteur de lumière par la source d'éclairage d'arrière-plan, avec une densité lumineuse d'au moins 10 cd/m² au niveau de la surface de sortie de la lumière, est visible pour l'observateur.

10. Dispositif indicateur (1) selon au moins l'une des revendications précédentes, **caractérisé en ce que** pour réaliser une projection superposée d'un marqueur lumineux pouvant être représenté au moyen de la source de lumière (6) et un éclairage d'arrière-plan réglable au moyen de la source d'éclairage d'arrière-plan (12), la source de lumière (6) de l'aiguille (3) présente une intensité lumineuse supérieure à celle de la source d'éclairage d'arrière-plan (12).
